# EUROPÄISCHE PATENTSCHRIFT

(11) **EP 0 779 450 B1**
(45) Veröffentlichungstag und Bekanntmachung des Hinweises auf die Patenterteilung: **22.03.2000**
(21) Anmeldenummer: 96117268.1
(22) Anmeldetag: 28.10.1996
(51) Int. Cl.: F16H 7/08, F01L 1/02

(54) **Hydraulische Spannvorrichtung zum Spannen eines nachgiebigen Antriebsmittels einer Nockenwelle**
Hydraulic tensioner for flexible elements driving a camshaft
Tendeur hydraulique pour organes flexibles d'entraînement d'un arbre à cames

(30) Priorität: 13.12.1995 DE 19546557
(43) Veröffentlichungstag der Anmeldung: 18.06.1997
(73) Patentinhaber: DaimlerChrysler AG, 70567 Stuttgart (DE)
(72) Erfinder: Schnüpke, Hubert, 70327 Stuttgart (DE); Kronowiecki, Helmut, 73274 Notzingen (DE); Rau, Erhard, 73235 Weilheim (DE); Gülpen, Robert, 70327 Stuttgart (DE); Bruchner, Klaus, Dr., 73061 Ebersbach (DE)

(56) Entgegenhaltungen:
- DE-A- 4 017 601
- DE-A- 4 035 202
- FR-A- 2 350 518
- US-A- 5 333 578
- PATENT ABSTRACTS OF JAPAN vol. 095, no. 006, 31.Juli 1995 & JP 07 071544 A (SUZUKI), 17.März 1995,
- PATENT ABSTRACTS OF JAPAN vol. 018, no. 212 (M-1593), 15.April 1994 & JP 06 011002 A (SUZUKI), 21.Januar 1994,

## Beschreibung

Die Erfindung betrifft eine hydraulische Spannvorrichtung zum Spannen eines nachgiebigen Antriebsmittels einer Nockenwelle gemäß dem Oberbegriff des Patentanspruchs 1.

Aus der DE 40 35 202 A1 ist eine gattungsgemäße Spannvorrichtung bekannt. Die Spannvorrichtung umfaßt einen in einem Hydraulikgehäuse verschiebbaren und vom Schmieröldruck aus dem Schmierölkreislauf der Brennkraftmaschine beaufschlagbaren Druckstößel und eine Spannschiene. Die Anordnung der zur Ölversorgung der Spannvorrichtung dienenden Ölkanäle bedingt einen hohen Arbeitsaufwand und verteuert dadurch die Herstellung der Spannvorrichtung.

Zum allgemeinen technischen Hintergrund wird auf die DE 40 35 254 A1 verwiesen.

Es ist die Aufgabe der Erfindung eine Spannvorrichtung der gattungsgemäßen Art derart auszubilden, daß eine kostengünstige Ölversorgung der Spannvorrichtung erreicht wird.

Diese Aufgabe wird erfindungsgemäß durch die im Kennzeichen des Patentanspruchs 1 gegebenen Merkmale gelöst.

Durch die Erfindung wird eine vereinfachte Herstellung der Spannvorrichtung und des Motorgehäuses erreicht. Separate Bohrungen zur Ölversorgung der Spannvorrichtung aus dem Ölkanal des Motorgehäuses können entfallen, da die von außen zugängliche Zuführungsleitung im Motorgehäuse eingegossen ist. Ferner ist die Zuführungsleitung als Drosselkanal ausgebildet, der durch seine Tiefe und seinen Querschnitt die Menge des durch ihn fließenden Schmieröls festlegt. Der im Motorgehäuse verlaufende Ölkanal wird durch die Spannvorrichtung abgedeckt, so daß zusätzliche Verschlußelemente zum Verschließen des Ölkanals entfallen können.

Weitere Vorteile und Ausgestaltungen der Erfindung gehen aus den Unteransprüchen und der Beschreibung hervor.

Ein Ausführungsbeispiel ist im folgenden in zwei Zeichnungen mit weiteren Einzelheiten näher erläutert, und zwar zeigen:
- Fig. 1: eine Vorderansicht auf die Steuerseite einer Brennkraftmaschine einschließlich einer erfindungsgemäßen Spannvorrichtung und
- Fig. 2: einen Teilschnitt durch die Spannvorrichtung aus Fig. 1 gemäß der Linie II-II.

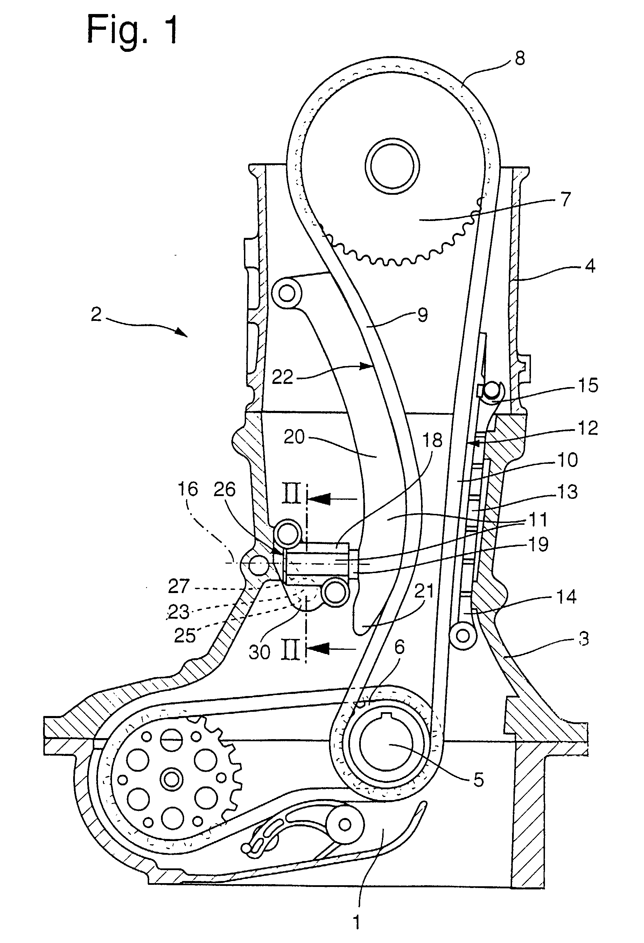

In Fig. 1 ist eine als Steuerseite 1 bezeichnete Stirnseite eines Motorgehäuses 2 einer Brennkraftmaschine dargestellt. Das Motorgehäuse 2 umfaßt ein Kurbelgehäuse 3 und ein Zylinderkopfgehäuse 4.

Im Kurbelgehäuse 3 ist eine Kurbelwelle 5 angeordnet, auf deren Stirnseite ein Antriebsrad 6 drehfest befestigt ist. Im Zylinderkopfgehäuse 4 ist eine nicht dargestellte Nockenwelle angeordnet, die mit einem weiteren Antriebsrad 7 drehfest verbunden ist. Die Antriebsräder 6, 7 sind als Kettenräder ausgebildet. Die Nockenwelle wird von der Kurbelwelle 5 über ein nachgiebiges Antriebsmittel 8 angetrieben, wobei als Antriebsmittel 8 eine Steuerkette vorgesehen ist, die das Antriebsrad 7 der Nockenwelle und das Antriebsrad 6 der Kurbelwelle 5 umschlingt.

Gemäß der durch Pfeil angedeuteten Drehrichtung der Kurbelwelle 5 bildet ein Kettenabschnitt der Steuerkette 8 ein Lostrum 9 und ein weiterer Kettenabschnitt ein Lasttrum 10. Die Steuerkette 8 wird auf der Seite des Lostrums 9 über eine unten näher beschriebene Spannvorrichtung 11 gespannt. An einer Außenseite 12 des Lasttrums 10 ist eine Führungsgleitschiene 13 angeordnet, die an ihrem einen Ende 14 im Kurbelgehäuse 3 und an ihrem anderen Ende 15 im Zylinderkopfgehäuse 4 gelagert ist.

Die Spannvorrichtung 11 umfaßt einen in einer in Richtung einer Querachse 16 der Brennkraftmaschine verlaufenden Zylinderbohrung 17 eines Hydraulikgehäuses 18 verschiebbaren und vom Schmieröldruck aus dem Schmierölkreis der Brennkraftmaschine beaufschlagbaren Druckstößel 19 und eine Spannschiene 20. Die Spannschiene 20 ist im Zylinderkopfgehäuse 4 drehbar gelagert und besitzt ein freies Ende 21. Die Spannschiene 20 weist eine bogenförmige Kontur zur Anlage der Steuerkette 8 auf und liegt an der Außenseite 22 des Lostrums 9 der Steuerkette 8 an. Der Druckstößel 19 des Hydraulikgehäuses 18 liegt am freien Ende 21 der Spannschiene 20 an und verschwenkt die Spannschiene 20, indem der Druckstößel 19 die Spannschiene 20 auf der der Steuerkette 8 abgewandten Seite der Spannschiene 20 gegen die Steuerkette 20 drückt bis eine vorgegebene Spannung der Steuerkette 8 erreicht ist.

Im Kurbelgehäuse 3 ist zur Schmierölversorgung der Kurbelwellenhauptlager ein Hauptölkanal 23 angeordnet. Dieser Hauptölkanal 23 erstreckt sich in Richtung einer Längsachse 24 des Kurbelgehäuses 3 und wird durch Vergießen und anschließendes Fertigbohren hergestellt. An den Stirnseiten des Kurbelgehäuses 3 wird der Hauptölkanal 23 normalerweise durch besonders eingedrückte Blechstopfen oder entsprechend andere Verschlußmittel (z.B. Kugel oder Schraube) nach außen verschlossen.

Um diesen Fertigungsaufwand zu vermeiden, ist erfindungsgemäß das Hydraulikgehäuse 18 an der Stirnseite 1 des Kurbelgehäuses 3 so plaziert, daß es gleichzeitig eine Austrittsöffnung 25 des Hauptölkanals 23 abdeckt. Damit ersetzt das Hydraulikgehäuse 18 den Blechstopfen bzw. ein anderes Verschlußelement.

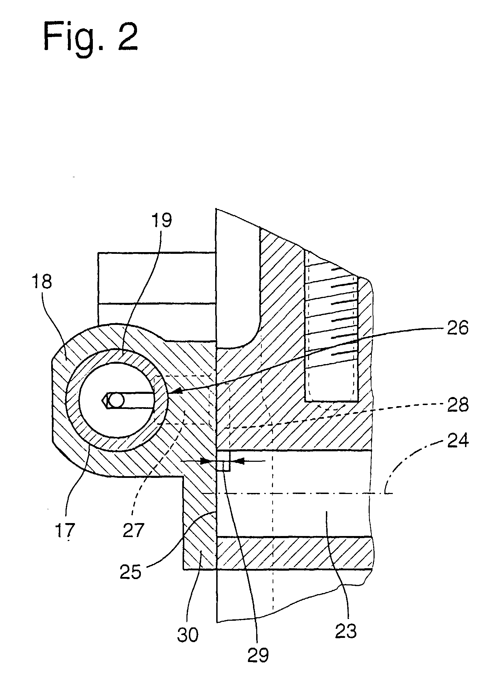

Gemäß Fig. 2 wird der Druckstößel 19 in der Zylinderbohrung 17 an seiner kettenabgewandten Seite 26 über eine radial im Hydraulikgehäuse 18 verlaufende Zuführungsleitung 27 mit dem Schmieröl aus dem sich im Kurbelgehäuse 3 erstreckenden Hauptölkanal 23 beaufschlagt. Die Zylinderbohrung 17 und der Hauptölkanal 23 sind versetzt angeordnet. Die Zylinderbohrung 17 verläuft oberhalb des Hauptölkanals 23 und steht mit diesem über eine Nut 28 in Verbindung. Die im Motorgehäuse 2 eingegossene Nut 28 ist als Drosselkanal ausgebildet, der durch seine Tiefe 29 und seinen Querschnitt die Menge des durch ihn fließenden Schmieröls festlegt. An der der Kurbelwelle 5 zugewandten Seite des Hydraulikgehäuses 18 ist ein Flanschabschnitt 30 des Hydraulikgehäuses 18 angeordnet, der am Kurbelgehäuse 3 anliegt und die Austrittsöffnung 25 des Ölkanals 23 abdeckt.

## Patentansprüche

1. Hydraulische Spannvorrichtung zum Spannen eines nachgiebigen Antriebsmittels (8) einer Nockenwelle einer Brennkraftmaschine, wobei die an einer Stirnseite (1) eines aus einem Zylinderkopfgehäuse (4) und einem Kurbelgehäuse (3) bestehenden Motorgehäuses (2) angeordnete Spannvorrichtung (11) einen in einer Zylinderbohrung (17) eines Hydraulikgehäuses (18) verschiebbaren und vom Schmieröldruck aus dem Schmierölkreis der Brennkraftmaschine beaufschlagbaren Druckstößel (19) und eine Spannschiene (20) umfaßt und wobei ferner das Hydraulikgehäuse (18) eine Austrittsöffnung (25) eines mit dem Schmierölkreis verbundenen Ölkanals abdeckt,
**dadurch gekennzeichnet**,
**daß** der Ölkanal von einem sich im Kurbelgehäuse in Richtung einer Längsachse (24) der Brennkraftmaschine erstreckenden Hauptölkanal (23) zur Schmierölversorgung von mindestens der Kurbelwellenhauptlager gebildet ist.

2. Hydraulische Spannvorrichtung nach Anspruch 1,
**dadurch gekennzeichnet**,
**daß** die Spannschiene (20) an einer Außenseite (22) eines Lostrums (9) des Antriebsmittels (8) anliegt.

3. Hydraulische Spannvorrichtung nach Anspruch 1 oder 2,
**dadurch gekennzeichnet**,
**daß** die Spannschiene (20) an dem Zylinderkopfgehäuse (4) schwenkbar gelagert und an ihrem freien Ende (21) das Hydraulikgehäuse (18) angeordnet ist.

4. Hydraulische Spannvorrichtung nach einem der Ansprüche 1 bis 3,
**dadurch gekennzeichnet,**
**daß** eine im Hydraulikgehäuse (18) angeordnete Zylinderbohrung (17) zur Aufnahme des Druckstößels (19) versetzt zum Hauptölkanal (23) angeordnet ist und mit diesem über eine als Drossel wirkende Nut (28) in Verbindung steht.

## Claims

1. Hydraulic jig for holding a flexible drive means (6) of an internal-combustion engine camshaft, whereby the jig (11), disposed on a front face (1) of a crankshaft housing (2), comprises a push rod (19), which can slide into a cylindrical boring (17) of a hydraulics housing (18), and can have lubricant-oil pressure, from the lubricant circulation of the internal-combustion engine, applied to it, and a tensioning bar (20), and whereby, in addition, the hydraulics housing (18) covers an outlet opening (25) of an oil duct which is connected to the lubricant circulation,
characterized in that
the oil duct is formed by a main oil duct (23), for the supply of lubricant to at least one crankshaft main bearing, extending, in the crankcase, in the direction of a lengthwise axis (24) of the internal-combustion engine.

2. Hydraulic jig in accordance with claim 1,
characterized in that
the tensioning bar (20) lies on the outer side (22) of a slack strand (9) of the drive means (8).

3. Hydraulic jig in accordance with claim 1 or claim 2,
characterized in that
the tensioning bar (20) is supported, on the cylinder-head housing (4), such that it can swing, and in that the hydraulics housing (18) is disposed on the free end (21) of the tensioning bar (20).

4. Hydraulic jig in accordance with any one of claims 1 to 3,
characterized in that
a cylindrical boring (17), for the uptake of the push rod (19), is disposed shifted towards the main oil duct (23) and is connected to the latter via a slot acting as a pressure regulator.

## Revendications

1. Dispositif tendeur hydraulique servant à tendre un moyen d'entraînement flexible (8) d'un arbre à cames, d'un moteur à combustion interne, dans lequel le dispositif tendeur (11) disposé sur une face frontale (1) d'un carter (2) du moteur, qui est constitué par un carter de culasse (4) et un carter de vilebrequin (3), comprend un poussoir de compression (19), qui est déplaçable dans un perçage cylindrique (17) d'un boîtier hydraulique (18) et peut être chargé par une pression d'huile lubrifiante délivrée par le circuit d'huile lubrifiante du moteur à combustion interne et un rail de tension (20), et dans lequel en outre le boîtier hydraulique (18) recouvre une ouverture de sortie (25) d'un canal d'huile relié au circuit d'huile lubrifiante;
caractérisé en ce que le canal d'huile est formé par un canal d'huile principal (23), qui s'étend dans le carter de vilebrequin en direction d'un axe longitudinal (24) du moteur à combustion interne et sert à alimenter en huile lubrifiante au moins les paliers principaux du vilebrequin.

2. Dispositif tendeur hydraulique selon la revendication 1, caractérisé en ce que le rail de tension (20) s'applique contre une face extérieure (21) d'un brin lâche (9) du moyen d'entraînement (8).

3. Dispositif tendeur hydraulique selon la revendication 1 ou 2, caractérisé en ce que le rail de tension (20) est monté de manière à pouvoir pivoter sur le carter de culasse (4) et que le boîtier hydraulique (18) est disposé sur l'extrémité libre (21) du rail.

4. Dispositif tendeur hydraulique selon l'une des revendications 1 à 3, caractérisé en ce que le perçage cylindrique (17), qui est disposé dans le boîtier hydraulique (18) et sert à loger le poussoir de compression (19), est disposé de façon décalée par rapport au canal d'huile principal (23) et est relié à ce dernier par l'intermédiaire d'une gorge (28) agissant en tant que dispositif d'étranglement.
